Europäisches Patentamt

European Patent Office

Office européen des brevets

(19)

(11) Publication number: **0 293 321**
**A2**

(12) **EUROPEAN PATENT APPLICATION**

(21) Application number: **88710008.9**

(22) Date of filing: **25.03.88**

(51) Int. Cl.⁴: **B 60 K 20/16**
    **F 16 D 25/14**

(30) Priority: **25.04.87 JP 102385/87**

(43) Date of publication of application:
    **30.11.88 Bulletin 88/48**

(84) Designated Contracting States: **DE FR GB**

(71) Applicant: **DIESEL KIKI CO., LTD.**
    **No. 6-7, Shibuya 3-chome**
    **Shibuya-ku Tokyo (JP)**

(72) Inventor: **Sato, Yuji c/o Diesel Kiki Co. Ltd.**
    **Higashi-matsuyama Factory 13-26 Yakyucho 3-chome**
    **Higashi-matsuyama Saitama (JP)**

    **Kono, Hiromi c/o Diesel kiki Co. Ltd.**
    **Higashi-matsuyama Factory 13-26 Yakyucho 3-chome**
    **Higashi-matsuyama Saitama (JP)**

    **Tanoue, Akihumi c/o Diesel Kiki Co. Ltd.**
    **Higashi-matsuyama Factory 13-26 Yakyucho 3-chome**
    **Higashi-matsuyama Saitama (JP)**

(74) Representative: **von Rohr, Hans Wilhelm, Dipl.-Phys. et al**
    **Patentanwälte Gesthuysen & von Rohr Huyssenallee 15**
    **Postfach 10 13 33**
    **D-4300 Essen 1 (DE)**

(54) Apparatus for controlling a fluid-pressure differential cylinder actuator.

(57) An apparatus for controlling a fluid-pressure differential cylinder actuator includes a pulse generator (207) for producing a pulse signal to be issued to a solenoid operated valve (4), (5) for controlling an inflow and an outflow of the cylinder actuator (2). The pulse signal thus issued is a high frequency pulse whose pulse repetition period is shorter than an on-off response time of the valve (4), (5) and also whose duty factor is variable.

FIG. 1

EP 0 293 321 A2

Description

# APPARATUS FOR CONTROLLING A FLUID-PRESSURE DIFFERENTIAL CYLINDER ACTUATOR

## BACKGROUND OF THE INVENTION

### 1. Field of the Invention:

The present invention relates to an apparatus for controlling a fluid-pressure differential cylinder actuator suitable for use with an automatic clutch and an automatic transmission for motor vehicles.

### 2. Prior Art:

Japanese Patent Laid-open Publication Nos. 58-146722 and 60-146953 disclose controllers for a fluid-pressure differential cylinder actuator for an automobile automatic clutch or an automobile automatic transmission, in which valve opening and closing operation of a solenoid operated valve is controlled periodically by a pulse signal while regulating the duty factor of the pulse signal for eventually controlling the mechanical output of power of the cylinder actuator.

The pulse signal has a pulse repetition frequency (e.g. 40Hz) equal to an on-off response time of the solenoid operated valve. Thus, the pulse repetition period of this pulse is equal to 25 m sec in which instance the minimum pulse width is 6 m sec or more and hence the pulse duty factor is regulated to start increasing from a minimum value corresponding to this minimum pulse width.

In case where the pulse signal has a pulse repetition period of 25 m sec and a minimum width of 6 m sec, a change in mechanical output per pulse (a single cycle of on-off operation of the valve) appearing on the piston is about 0.1 mm under the influence of various factors, e.g. a volume of the cylinder, a pressure of working fluid, etc. This means that the output of the cylinder actuator can be regulated stepwise by about 0.1 mm at a minimum and hence the resolution of cylinder output is about 0.1 mm.

The cylinder actuator having such power resolution of about 0.1 mm is not satisfactory when used with an automatic clutch in which a fine power control such as a half-clutching is a majour requirement. Thus, a smooth and efficient power transmission is difficult to obtain.

## SUMMARY OF THE INVENTION

With the foregoing difficulties in view, it is an object of the present invention to provide an apparatus capable of controlling the output of a fluid-pressure differential cylinder actuator continuously and smoothly.

Another object of the present invention is to provide an apparatus for controlling a fluid-pressure differential cylinder at a high power output resolution.

According to the present invention, there is provided an apparatus for controlling a fluid-pressure differential cylinder actuator including a first chamber and a second chamber having a larger pressure receiving area than said first chamber, said first chamber being connected through a first connecting passage to a hydraulic power supply, said second chamber being connected through a second connecting passage to a tank, said first and second chambers being connected together by a third connecting passage, said apparatus comprising:

a first solenoid·operated valve disposed in said first connecting passage for making and blocking a fluid communication between said first chamber and said hydraulic power supply;

a second solenoid operated valve disposed in said third connecting passage for opening and closing the latter;

a third solenoid operated valve disposed in said second connecting passage for opening and closing the latter;

and a pulse generator connected with said second and third solenoid operated valves for issuing them a high frequency pulse signal having a pulse repetition period shorter than an on-off response time of each of said second and third solenoid operated valves, the duty factor of said pulse signal being variable.

With this construction, the second and third solenoid operated valves for controlling the operation of the cylinder actuator receive high frequency pulse signals which make is possible to regulate the open areas between value elements and mating valve seats in analog proportion to the pulse duty factor. With this regulation, an inflow and an outflow of working fluid can properly be controlled continuously or non-stepwise. Consequently, the output power of the differential cylinder actuator is controlled accurately and continuously at an increased degree of resolution.

Many other advantages and features of the present invention will become manifest to those versed in the art upon making reference to the detailed description and the accompanying sheets of drawings in which a preferred structural embodiment incorporating the principles of the present invention is shown by way of illustrative example.

## BRIEF DESCRIPTION OF THE DRAWINGS

FIG. 1 is a cross-sectional view of a fluid-pres.sure differential cylinder actuator in which the present invention is embodied;

FIG. 2 is a side elevational view of FIG. 1;

FIG. 3 is a side elevational view, partly in cross section, of a portion of the' actuator, showing a first solenoid operated valve and related parts thereof;

FIG. 4 is a view similar to FIG. 2, showing a third solenoid operated valve and related parts thereof;

FIG. 5 is a cross-sectional view of the first solenoid operated valve;

FIG. 6 is a cross-sectional view of a second solenoid operated valve;

FIG. 7 is a cross-sectional view of the third solenoid operated valve;

FIG. 8 is a hydraulic circuit diagram; and

FIG. 9 is a view illustrative of the manner in which the first to third solenoid operated valves are controlled to perform a predetermined piston stroke of the cylinder actuator.

## DETAILED DESCRIPTION

A preferred embodiment of the present invention will be described below in greater detail with reference to the accompanying drawings.

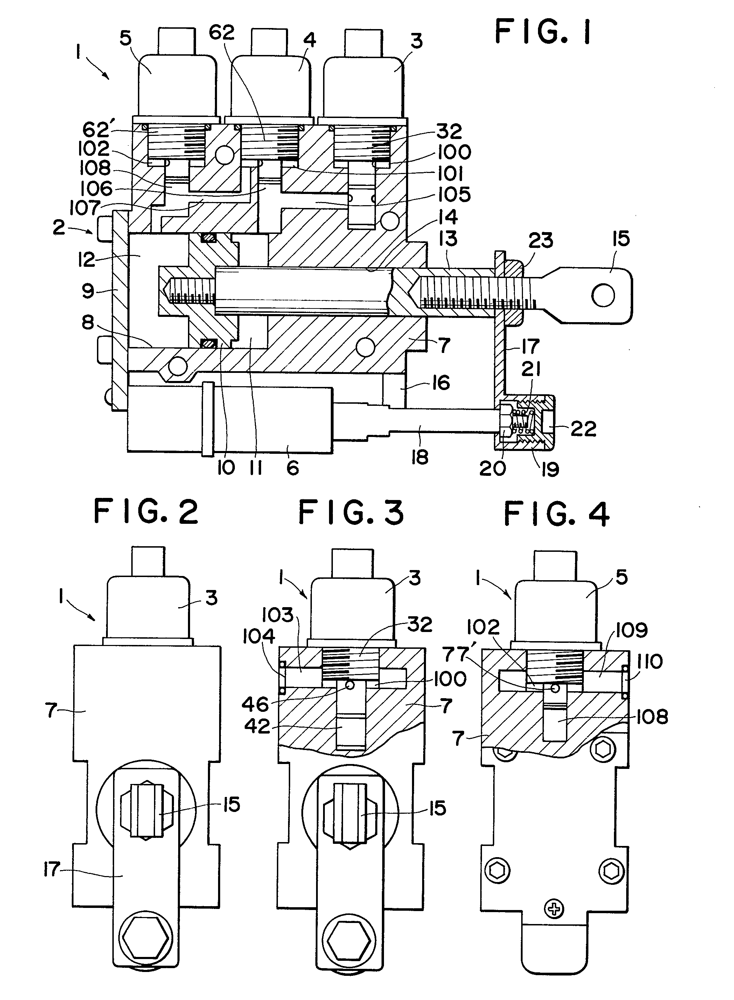

As shown in FIGS. 1 through 4, a fluid-pressure differential cylinder actuator 1 embodying the present invention generally comprises a cylinder body 2, first to third solenoid operated valves 3 - 5, and a position sensor 6.

The cylinder body 2 includes a cylinder block 7 having an internal cylinder bore 8 closed at one end thereof by a cover plate 9. A piston 10 is slidably fitted in the cylinder bore 8 so that these are defined in the cylinder body 2, two chambers 11, 12 on opposite sides of the piston 10. The chamber 11 is disposed on a small pressure-receiving area side of the piston 10 while the chamber 12 is disposed on a large pressure-receiving area side of the piston 10.

The piston 10 has a piston rod 13 slidably received in a through-hole 14 in the cylinder block 7 and projecting outwardly therefrom at one end thereof. The projecting end of the piston rod 13 is concentrically threaded to an output connecting rod 15 and supports thereon a connecting lever 17 for connection with the position sensor 6.

The position sensor 6 is so constructed as to detect a displacement or a positional change of the piston rod 13 as a change of electric resistance. The position sensor 6 is disposed below the cylinder body 1 and supported by the cover plate 9 and a support bracket 16 depending from the cylinder block 7. The position sensor 6 has a sensor rod 18 projecting outwardly from the body of the position sensor 6 and connected at an outer and to the connecting lever 17 secured to the piston rod 13. To this end, the outer end of the sensor rod 18 is externally threaded and is received in an internally threaded tubular end 19 of the connecting lever 17. A nut 20 is threaded to the outer end of the sensor rod 18 to couple the latter to the connecting lever 17. The nut 20 and hence the sensor rod 18 is normally urged leftwards in FIG. 1 by means of a compression coil spring 21 acting between the nut 20 and an end cap 22 threaded in the internally threaded tubular end 19 so that a movement of the piston rod 13 is smoothly transmitted to the sensor rod 18. The end of the connecting lever 17 remote from the tubular end 19 is fitted over the connecting rod 15 and secured by a nut 23 to an outer end face of the piston rod 13.

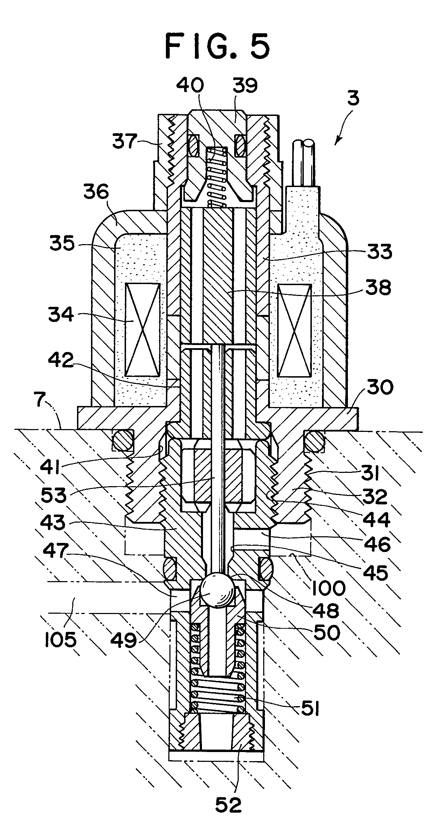

The first solenoid operated valve 3, as shown in greater detail in FIG. 5, includes a body 30 having a downwardly extending tubular mounting portion 32 and a plunger guide tube 33 disposed concentrically above the mounting portion 32, the mounting portion 32 being externally threaded as at 31. A cylindrical energizing coil 34 is disposed around the plunger guide tube 33 and held in position against displacement by a molded synthetic resin 35 covered by a case 36.

The case 36 is secured to the valve body 30 by means of a nut 37 threaded to an upper end of the plunger guide tube 33. The pluger guide tube 33 movably receives therein a plunger 38 which is normally urged axially downwardly by a compression coil spring 40 disposed between an upper end of the plunger 38 and an end cap 39 fitted into the upper end of the plunger guide tube 33.

The tubular mounting portion 32 of the body 30 is also internally threaded as at 41 and guidedly receives therein a rod guide member 42. The rod guide member 42 is firmly retained in the mounting means of a valve seat member 43 threaded into the internally threaded hole 41 of the tubular mounting portion 32.

The valve seat member 43 has an externally threaded upper portion 44 tightly fastened to the mounting portion 32, a central axial hole 45 extending longitudinally therethrough, a radial inlet port 46 disposed adjacent to the externally threaded upper portion 44 and communicating with the axial hole 45, and a radial outlet port 47 disposed below the inlet port 46 and comunicating with the axial hole 45. The axial hole 45 is stepped at a portion between the inlet port 46 and the outlet port 47 so as to form a downwardly facing valve seat 48.

A valve element 49 comprising a ball valve is held in a valve retainer 50 and urged into contact with the valve seat 48 by means of a compression coil spring 51 acting between the valve retainer 50 and a spring retainer threaded to a lower portion of the valve seat member 43.

The valve element 49 is held in contact with one end of a push rod 53 connected at the other end to the plunger 38 so that when the coil 34 is de-energized, the valve element 49 is held into contact with the valve seat 48 under the force of the spring 51, thereby closing the solenoid operated valve.

As shown in FIGS. 1, 3 and 5, the first solenoid operated valve 3 of the foregoing construction is mounted on the cylinder block 7 by threading the mounting portion 42 into an internally threaded mounting hole 100 in the cylinder block 7. In this mounted condition, the inlet port 46 of the valve seat member 43 opens at its one end to a lower portion of the mounting hole 100. The mounting hole 100 is connected through a fluid passage 103 to an intake hole 104 in the cylinder block 7 and hence the inlet port 46 of the first solenoid operated valve 3 is held in fluid communication with the intake hole 104.

On the other hand, the outlet port 47 of the first solenoid operated valve 3 is connected through a fluid passage 105 in the cylinder block 7 with the small pressure-receiving area side chamber 11 in the cylinder body 2.

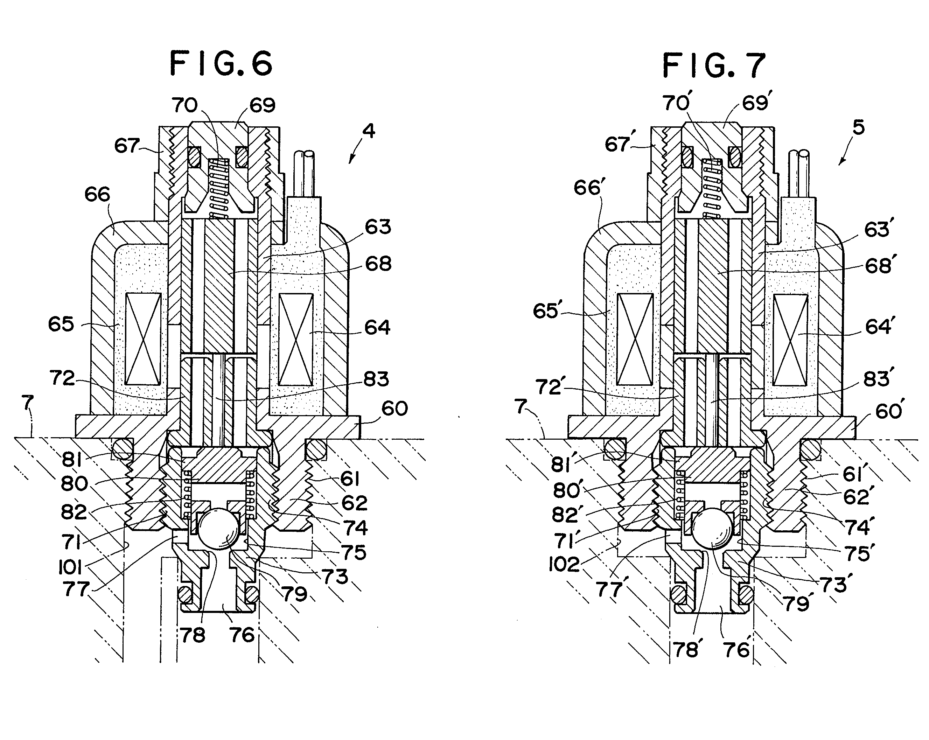

The second solenoid operated valve 4 is shown in greater detail in FIG. 6, in which a body 60 of the valve 4 includes a downwardly projecting tubular mounting portion 62 threaded externally as at 61, and a plunger guide tube 63 disposed concentrically above the tubular mounting portion 60. A cylindrical energizing coil 64 is disposed around the plunger guide tube 63 and locked in position against displacement as it is embodied in a molded synthetic resin 65 covered by a case 66. The case 66 is secured to the valve body 60 by means of a nut 67 threaded over an externally threaded upper end of the plunger guide tube 63. The plunger guide tube 63 movably receives therein a plunger 68 which is normally urged axially downwardly under the force of a compression coil spring 70 disposed between an upper end of the plunger 68 and an end cap 69 fitted in the upper end of the plunger guide tube 63. The mounting portion 62 of the body 60 is also internally threaded as at 71 and guidedly receives therein a rod guide member 72. The rod guide member 72 is firmly retained in the mounting portion 62 by means of a valve seat member 73 threaded into the internally threaded hole 71 in the tubular mounting portion 62.

The valve seat member 73 has an extenally threaded upper portion 74 fastened to the mounting portion 62, and an axial hole 75 extending longitudinally through the valve seat member 73, the lower end of the axial hole 75 solely constituting an inlet port 76. The valve seat member 73 also has a radial outlet port 77 disposed upwardly of the inlet port 76, and an upwardly facing annular valve seat 78 disposed between the inlet port 76 and the outlet port 77.

A valve element 73 is in the from of a ball valve and held in a valve retainer 80 movably received in the axial hole 75 in the valve seat member 73. A compression coil spring 82 acts between the valve seat member 73 and an upper flange 84 of the valve retainer 80 to urge the valve retainer 80 upwardly. The valve element 79 is thus normally held out of contact with the valve seat 78 under the force of the spring 82. The valve retainer 80 is held in contact with a lower end of a push rod 83 which in turn is connected at its upper end to the plunger 68. With this construction, when the coil 64 is de-energized, the valve element 79 is held out of contact with the valve seat 78 under the force of the spring 82. The second selenoid operated valve 4 therefore stands opened.

The second solenoid operated valve 4 of the foregoing construction is mounted on the cylinder block 7, as shwon in FIGS. 1 and 4, in which the mounting portion 62 of the valve 4 is threaded into an internally threaded mounting hole 101 in the cylinder block 7. In this mounted condition, the inlet port 76 is communicated with the fluid passage 105 through a fluid passage 106 while the outlet port 77 is opening to a lower portion of the mounting hole 101 and connected through a fluid passage 107 to the large pressure-receiving area side chamber 12 in the cylinder body 2.

As shown in FIG. 7 the third solenoid operated valve 5 is identical in structure to the second solenoid valve 4 described above and hence no description is necessary. With this identical structure in view; corresponding parts are designated by the same reference numerals with prime affixed thereto. The third solenoid operated valve 5 is mounted on the cylinder block 7 by threading the mounting portion 62' into a mounting hole 102 in the cylinder block 7. An inlet port 76' in a valve seat member 73' communicates with the fluid passage 107 through a fluid passage 108 while an outlet port 77' is opening to a lower portion of the mounting hole 102 and connected through a fluid passage 109 to a discharge hole 110.

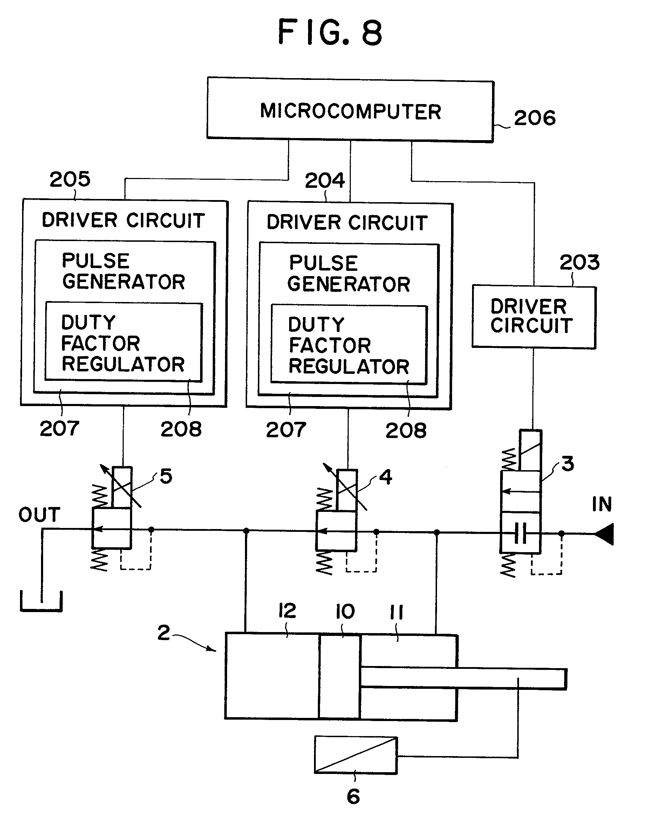

FIG.8 shows a control circuit for the differential cylinder actuator 1 described above. The small pressure-receiving area side chamber 11 is connected successively through the fluid passages 105, 103 and the first solenoid operated valve 3 disposed therein to a hydraulic power supply (not shown). On the other hand, the large pressure-receiving area side chamber 12 is connected through the fluid passage 108, 109 and the third solenoid operated valve 5 disposed therein to a tank. Both chambers 11, 12 are connected together through the fluid passages 106, 107 and the second solenoid operated valve 4 disposed therein.

The first to third solenoid operated valves 3 - 5 receive pulse signals issued respectively from driver circuits 203 - 205 for controlling an inflow and an outflow of working fluid in both chambers 11, 12. The inflow and outflow of working fluid are converted into mechanical forces which are finaly outputted to an external device via the cylinder rod 13.

The first solenoid operated valve 3 is merely controlled in an on-off mode as in the case of a two-position directional control valve. When the driver circuit 203 issues an exciting current to energize the coil 34, the valve 3 is turned on or opened. The valve 3 is kept closed while the coil 34 is de-energized.

To the second solenoid operated valve 4, the driver circuit 204 supplies a pulse signal of a high frequency such as 500 Hz so that a pulse repetition period of the pulse signal is smaller than an on-off response time of the valve element 79. The duty factor (pulse width/pulse repetition period) of the pulse signal is regulated to achieve an analog proportional control of the open area of the valve 4. Stated more specifically, the greater the duty factor, the smaller the valve open area. When the duty factor becomes maximum, the valve 4 is fully closed. Conversely, the valve open area increases with a decrease in duty factor. When the duty factor is lowered to a minimum value, the valve 4 is fully opened, allowing a maximum flow of the working fluid.

The driver circuit 204 is composed of a pulse generator 207 capable of producing a high freguency pulse signal and including a duty factor regulator 208. Operation of the drive circuit 204 is controlled according to a suitable program stored in the microcomputer 206.

The third solenoid operated valve 5, likewise the second solenoid operated valve 4 stated above, receives a high frequency (e.g. 500 Hz) pulse signal delivered from the driver circuit 205. The duty factor of the high frequency pulse signal is regulated to achieve an analog proportional control of the open area of the valve 5.

In order to control the output of the differential cylinder actuator 1, the microcomputer 206 sends control demand signals to the respective driver circuits 203, 204, 205 which in turn issue predetermined pulse signals to the corresponding solenoid operated valves 3 - 5 whereupon the solenoid operated valves 3 - 5 are operated to vary an inflow and an outflow of the differential cylinder actuator 1, thereby varying the mechanical output of the cylinder actuator 1.

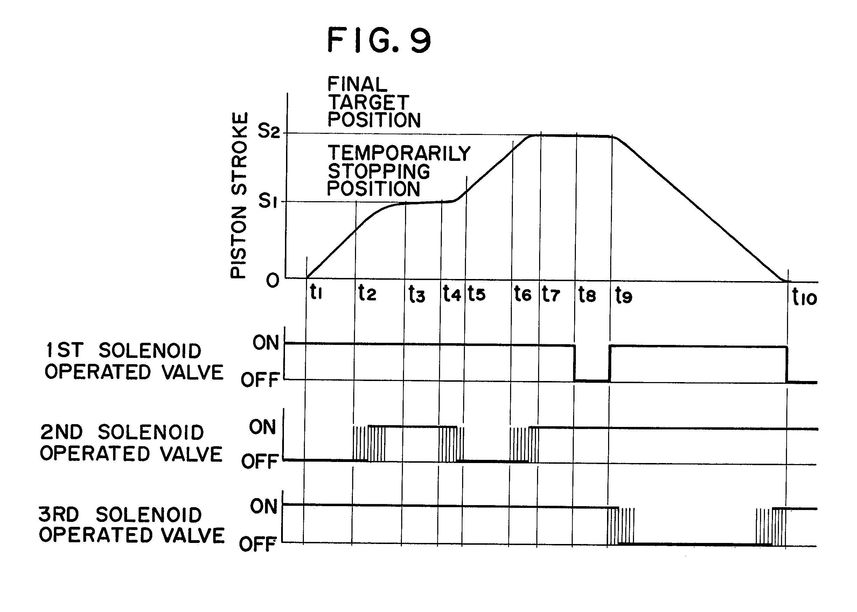

An exemplary operation mode of the differential cylinder actuator 1 will be described below with reference to FIGS. 8 and 9. The first solenoid operated valve 3 is energized to open the valve 3. At the same time, an exciting current is issued to the third solenoid operated valve 5 to fully close same. The second solenoid operated valve 4 is kept de-energized and hence is opening continuously. Thus, a working fluid is allowed to concurrently flow into both the small pressure-receiving area side chamber 11 and the large pressure-receiving area side chamber 12. Due to a pressure difference generated between the two chambers 11, 12, the piston 10 is caused to start moving rightwards at a point of time t1. At a point of time t2, the driver circuit 204 begins to issue a high frequency pulse signal to the second selenoid operated valve 4 for temporarily stopping the rightward movement of the piston 10 of the differential cylinder actuator 1. Application of the pulse signal is achieved such that the duty factor of the pulse signal is initially small, then gradually increased as the time goes on and finally becomes maximum just before a point of time t3. This means that the open area of the second solenoid operated valve 4 varies gradually in an analog manner from the maximum (the valve full open position) to the minimum (the valve full close position) in which an inflow of working fluid to the large pressure receiving area side chamber 12 is blocked. The piston 10 is thus stopped at a predetermined position S1. When a predetermined period of time ranging between points of times t3 and t4 has lapsed, the duty factor of the pulse signal on the second solenoid operated valve 4 is decreased gradually to thereby increase the valve open area from zero to the maximum. The piston 10 again moves rightwards. This condition is maintained for the period ranging from a point of time t5 to a point of time t6 at which the piston 10 reaches to a position near a final target position S2. In this instance, the pulse duty factor is again increased to thereby reduce the valve open area proportionally. At a point of time t7, the valve 4 is fully closed whereupon the forward stroke of the piston 10 is completed and the piston 10 is thus stopped at the final target position S2.

The movement of the piston 10 of the differential cylinder actuator 1 is controlled by a feed back signal issued from the position sensor 6 so that the pulse duty factor is increased as the piston approaches the temporarily stopping position S1 and the final target position S2, thereby preventing the piston 10 from overrunning beyond the positions S1, S2.

When the piston 10 is to be returned from the final target position, the first solenoid operated valve 3 is energized to open at a point of time t9. Simultaneously therewith, a pulse signal having a large pulse duty factor is supplied to the second solenoid operated valve 4 at a large duty factor to keep the closed condition of the valve 4. Conversely, the third solenoid operated valve 5 receives a pulse signal of a small duty factor with the result that the working fluid is expelled from the large pressure-receiving area side chamber 12, thereby moving the piston leftwards. The return speed of the piston 10 can be controlled by regulating the duty factor of the high frequency pulse issued to the third solenoid operated valve 5. This pulse duty factor is set at a maximum value when the return stroke of the piston 10 is terminated.

Obviously, many modifications and variations of the present invention are possible in the light of the above teaching. It is therefore to be understood that within the scope of the appended claims, the invention may be practiced otherwise than as specifically described.

## Claims

1. An apparatus for controlling a fluid-pressure differential cylinder actuator including a first chamber and a second chamber having a larger pressure receiving area than said first chamber, said first chamber being connected through a first connecting passage to a hydraulic power supply, said second chamber being connected through a second connecting passage to a tank, said first and second chambers being connected together by a third connecting passage, said apparatus comprising:

(a) a first solenoid operated valve disposed in said first connecting passage for making and blocking a fluid communication between said first chamber and said hydraulic power supply;

(b) a second solenoid operated valve disposed in said third connecting passage for opening and closing the latter;

(c) a third solenoid operated valve disposed in said second connecting passage for opening and closing the latter; and

(d) a pulse generator connected with said second and third solenoid operated valves for issuing them a high frequency pulse signal having a pulse repetition period shorter than an on-off response time of each of said second and third solenoid operated valves, the duty factor of said pulse signal being variable.

2. An apparatus according to claim 1, wherein the open area of each of said second and third solenoid operated valves is varied with a change in pulse duty factor.

FIG. 1

FIG. 2    FIG. 3    FIG. 4

# FIG. 5

FIG.6

FIG.7

0293321

# FIG. 8

# FIG. 9

FINAL TARGET POSITION

TEMPORARILY STOPPING POSITION

PISTON STROKE

1ST SOLENOID OPERATED VALVE

2ND SOLENOID OPERATED VALVE

3RD SOLENOID OPERATED VALVE